Europäisches Patentamt

(19) European Patent Office

Office européen des brevets

(11) **EP 1 001 258 A1**

(12) **DEMANDE DE BREVET EUROPEEN**

(43) Date de publication:
**17.05.2000 Bulletin 2000/20**

(51) Int Cl.⁷: **G01M 19/00**

(21) Numéro de dépôt: **99402820.7**

(22) Date de dépôt: **15.11.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **16.11.1998  FR 9814358**

(71) Demandeurs:
  • **Espace Industrie Controles**
    **78180 Montigny-Le Bretonneux (FR)**
  • **Intespace**
    **31400 Toulouse (FR)**

(72) Inventeurs:
  • **Courtois, Max**
    **78960 Voisins le Bretonneux (FR)**
  • **Merino, Albert**
    **31450 Fourquevaux (FR)**

(74) Mandataire: **Moutard, Pascal Jean et al**
    **Cabinet Beau de Loménie**
    **158, rue de l'Université**
    **F-75340 Paris Cedex 07 (FR)**

(54) **Procédé et dispositif de mesure 3D en chambre thermique**

(57)    L'invention concerne un dispositif pour mesurer les variations géométriques d'un élément (16) soumis à un premier puis à un deuxième état de contrainte thermique, caractérisé en ce qu'il comporte :

- une chambre thermique (2.4) et des moyens pour porter la chambre à un premier puis à un deuxième état de contrainte thermique
- un cadre thermostaté (10) de référence, pour y placer l'élément.

La technique de photogrammétrie est utilisée pour effectuer des mesures sur l'élément (16) à mesurer.
   Cette invention s'applique notamment à l'étude du comportement géométrique de structures soumises à un environnement de température et/ou de pression variable(s).

FIG.1

**Description**

L'invention concerne l'étude du comportement, notamment géométrique, de structures soumises à un environnement de température et/ou de pression variable (s).

De telles études sont réalisées lorsque l'on cherche à mieux connaître le comportement de certains matériaux, notamment de matériaux nouveaux ou évolués.

C'est le cas, par exemple, dans l'industrie automobile, où de nouveaux matériaux doivent être testés sur des gammes de température comprises, par exemple, entre 0°C et 60°C.

C'est également le cas dans le domaine spatial. En effet, les structures destinées à être assemblées sur un engin spatial font l'objet de mesures tridimensionnelles de toutes sortes.

La plupart de ces mesures sont réalisées en environnement de pression et température ambiantes, la contrainte essentielle résidant dans le respect des exigences de propreté en fonction de spécifications exprimées par des normes de classes de propreté.

Mais, certains des accessoires embarqués par les satellites, notamment des dispositifs d'antennes, nécessitent des mesures en environnement de simulation spatiale, pour vérifier qu'ils conservent leurs caractéristiques dans ces conditions extrêmes d'utilisation. L'efficacité d'un réflecteur d'antenne repose ainsi, en grande partie, sur la conservation de ses caractéristiques géométriques de conception et de construction au cours de son utilisation pratique dans l'espace.

L'efficacité de fonctionnement des éléments de satellite est donc testée dans des enceintes de simulation, développées à cet effet pour recréer artificiellement, et sur terre, des conditions proches de celles que devra subir le satellite, une fois en exploitation. Ces enceintes étanches et en général de grand volume permettent de générer en interne des conditions de température comprises entre des températures extrêmes, par exemple entre -170°C et +150°C, à la pression du vide (inférieure à 10$^{-5}$ mbar), tout en respectant des exigences de propreté dans le domaine de la contamination chimique ou par des particules. Les températures basses sont par exemple générées par des panneaux métalliques rayonnants parcourus par une circulation d'azote. Les températures élevées peuvent être générées par différentes méthodes, selon le type d'enceinte de simulation, par exemple, par des panneaux rayonnants ou des lampes à émission infrarouge ou par des lampes à lumière blanche.

Le vide est obtenu par un ensemble de pompes à vide.

Les constructeurs placent leur élément satellite à l'intérieur de l'enceinte, et souhaitent pouvoir comparer la géométrie de cet élément avant, et après, sollicitation par différentes contraintes de simulation spatiale. L'état de référence correspond à la géométrie de la structure en environnement ambiant. Les sollicitations sont ensuite examinées à différents états d'environnement (chaque état étant défini par une pression et une température). Chaque état est maintenu artificiellement par palier, pour laisser aux conducteurs des tests le temps nécessaire à l'exploitation des observations.

L'amplitude des variations dimensionnelles à mettre en évidence varie selon le type d'élément de satellite. Les spécifications de mesure ont longtemps été conditionnées par le défaut de solution efficace pour garantir des mesures en conformité. On constate actuellement une tendance générale vers des besoins pour une incertitude de mesure toujours plus contraignante. On peut, aujourd'hui, évaluer cette incertitude demandée entre ± 0,1 et ± 0,03 mm.

Les différentes expositions de l'élément aux contraintes thermiques, et leur incidence sur sa géométrie, font l'objet d'analyses poussées dont le résultat est un modèle géométrique théorique.

Des méthodes originales ont donc été développées pour assurer, dans ces environnements de simulation, des mesures tridimensionnelles ayant une certaine précision. Du fait de l'impossibilité d'accès à l'élément de satellite pour tout opérateur pendant l'essai, la plupart des méthodes développées utilisent aujourd'hui des procédés optiques de mesure.

Les premières mesures avaient été réalisées à l'aide de capteurs mécaniques, chacun des capteurs disposés fournissant une information monodimensionnelle.

Des visées par théodolite, ou lunettes de visée pivotant autour de deux axes perpendiculaires, réalisées à travers les hublots de l'enceinte de simulation, n'ont pas permis d'atteindre les précisions escomptées. De telles méthodes se heurtaient à la difficulté de définir, de façon stable, le modèle géométrique conforme aux conditions d'observation.

Les techniques de la photogrammétrie à vues convergentes ont permis d'obtenir des résultats fiables, et conformes aux exigences de précision des spécifications. Les mesures sont ainsi issues de clichés photographiques de l'objet à mesurer. Ces clichés sont réalisés à l'aide d'un capteur appelé chambre de prises de vues photogrammétrique. Ce capteur est généralement placé à l'intérieur de l'enceinte de simulation spatiale, en le protégeant dans un caisson étanche qui lui garantit des conditions d'environnement conformes aux besoins de son utilisation, et qui est équipé d'un hublot de qualité optique pour laisser passer le champ de l'objectif du capteur. La saisie des clichés est commandée à distance, depuis l'extérieur de l'enceinte de simulation. Pour générer la configuration nécessaire à la mesure, le capteur et/ou l'objet sont déplacés par des dispositifs, également commandés à distance. Une nouvelle génération de capteurs utilise un mode de saisie numérique, plutôt que sur film photographique, et apporte plus de souplesse dans la conduite de tels essais.

Les mesures photogrammétriques permettent de valider les modèles géométriques dont il a été question ci-dessus.

L'article de C.S. Fraser, intitulé "Refraction considérations for photogrammetric measurements in a thermal vacuum chamber", paru dans Photogrammetric Record, volume 14, n° 79, pages 99-112, avril 1992 décrit des déterminations photogrammétriques dans un environnement de caissons d'essai munis de hublots de visée.

La publication intitulée "Photogrammetric measurement in thermal vacuum chambers" de la Société GEODETIC Services, Inc. décrit diverses techniques de mesure photogrammétrique dans des chambres à vide, en particulier des techniques mettant en oeuvre plusieurs caméras, (l'objet étudié étant fixé), ou une seule caméra (avec rotation de l'objet à étudier). Elle décrit également une technique combinant ces deux approches.

Les méthodes utilisées jusqu'à présent posent un certain nombre de problèmes, tant en précision qu'en fiabilité d'exploitation.

Tout d'abord, le réseau, ou ensemble, des mesures réalisées avec les techniques connues présente une redondance statistique insuffisante.

De plus, il est difficile de comparer entre elles des mesures effectuées à chacun des paliers de l'essai, c'est-à-dire dans des conditions d'environnement, notamment de température, différentes.

Enfin, les méthodes connues n'offrent pas d'étalon de longueur maîtrisée pendant toute la durée de l'essai.

Cela pose donc un problème de stabilité des références au cours de l'essai, c'est-à-dire lorsque les conditions environnementales sont modifiées. Par exemple, lorsque la température passe, d'un palier à un autre, d'une valeur de - 20°C à une valeur de plus +60°C, il se pose le problème de pouvoir comparer, de manière cohérente, les mesures effectuées à ces deux températures, car l'ensemble de l'environnement, ou l'ensemble des références possibles, a bougé. Il se produit, en quelque sorte, un phénomène de perte de référentiel.

Pour bien illustrer certains des problèmes posés, on peut présenter la méthode traditionnelle de comparaison de déformées thermoélastiques entre deux états, $T_0$ et $T_1$, de la manière suivante :

-   on effectue tout d'abord une mesure de référence dans l'état $T_0$, avec une barre étalonnée à 20°C. Le calcul est mené sur toutes les acquisitions de cet état. Si la barre étalon n'est pas thermostatée à 20°C, le coefficient thermoélastique de la barre est pris en compte dans le calcul. Le résultat de ce calcul est un nuage de points en 3D, dans un référentiel $R_0$, à l'échelle vraie (au sens de la triple précision de l'étalonnage, de la régulation et du coefficient thermoélastique).
-   on effectue ensuite une mesure dans l'état $T_1$ à analyser, avec les mêmes impératifs sur la barre étalon. Le résultat du calcul est un nuage de points en 3D dans un référentiel $R_1$(proche de $R_0$, mais non confondu), à l'échelle vraie au sens des précisions instrumentales et environnementales.
-   on confond alors les deux référentiels $R_0$ et $R_1$, de manière à distinguer d'éventuelles déformées thermoélastiques en 3D par comparaison directe des coordonnées . Cette mise en correspondance de $R_0$ et $R_1$, effectuée par un procédé d'analyse statistique visant à ajuster au mieux les deux nuages de coordonnées (ajustement selon le principe des moindres carrés des résidus), suppose que les deux nuages sont indéformables et d'échelle fixe. Cette transformation de $R_1$ vers $R_0$ ne comporte donc que des translations et des rotations des trois axes. On note que ce type d'analyse présuppose l'invariance géométrique du nuage au cours des différents états, ce qui est contraire au but recherché.

Les limites de cette méthode classique sont les suivantes :

-   les deux points servant à définir l'échelle dans chacun des deux référentiels sont des points 3D, au même titre que l'ensemble des autres points 3D mesurés sur le système ou le sous système. Ils sont donc entachés, dans chacun des deux référentiels, d'une erreur de mesure individuelle engendrant une erreur de distance (moyenne quadratique des erreurs individuelles). Le coefficient thermoélastique appliqué et ou la qualité de la régulation engendrent eux-mêmes des erreurs sur le coefficient de correction d'échelle à apporter au cours des différents états. Au final, les deux référentiels $R_0$ et $R_1$ ne seront jamais rigoureusement à la même échelle, ce qui est pourtant un des postulats du calcul d'ajustement de référentiel.
-   l'ajustement de référentiel, pour être efficace, suppose également, soit que les points, dits fixes, n'aient pas bougé, soit qu'ils aient bougé de manière homogène et homothétique. Si, par accident, l'un des points "fixes" s'est déformé, même de manière peu importante, l'application d'un seuillage adéquat sur l'ajustement de référentiel pourra le mettre en évidence, et on pourra l'écarter du calcul. En revanche, si la déformée touche une zone plus étendue, et ce même avec des valeurs absolues importantes, il est à craindre que les algorithmes de seuillage soient pris en défaut, le calcul étant "tiré" vers ces points et les résidus répartis sur l'ensemble du référentiel. Si la déformée est importante, elle sera visible globalement mais non analysable localement ; si elle est peu importante, elle pourra parfois passer inaperçue.

Ces limites influent sur la précision et l'analyse des résultats.

## Exposé de l'invention

L'invention a tout d'abord pour objet un dispositif permettant d'obtenir une redondance suffisante des mesures.
A cette fin, l'invention a tout d'abord pour objet un dispositif pour mesurer les variations géométriques d'un élément soumis à un premier puis à un deuxième états de contrainte thermique, caractérisé en ce qu'il comporte :

- une chambre thermique, et des moyens pour porter la chambre à un premier puis à un deuxième état de contrainte thermique
- un cadre thermostaté de référence, pour y placer l'élément.

L'élément à mesurer étant placé dans le cadre thermostaté de référence, il est possible de réaliser des clichés photogrammétriques, ou des mesures photographiques, de l'objet, avec une bonne densité de points de référence. Cela provient du fait que le châssis est placé dans, ou entoure, l'objet : si on mesure bien le châssis, l'objet placé dans le châssis est également bien mesuré.
De plus, le cadre peut être le support de points de référence pour le recalage des mesures effectuées lors de différents paliers successifs d'essai, chaque palier correspondant par exemple à un état de contrainte thermique donnée.
Le cadre peut également servir de substitution aux étalons de référence mesurés lors d'un premier état de contraintes thermiques, en condition ambiante d'environnement. Par exemple, on peut disposer, à T = 20°C, plusieurs étalons autour du châssis : on obtient alors une mesure très précise à T = 20°C. Dans les étapes ultérieures, aux températures supérieures ou inférieures à 20°C, on n'utilise plus d'étalons, ceux-ci pouvant être modifiés du fait de la modification des contraintes thermiques. Mais on garde, dans ces étapes ultérieures, la référence du cadre thermostaté, des mires pouvant éventuellement être disposées sur ce cadre.
Par conséquent, l'invention concerne un dispositif pour mesurer les variations géométriques d'un élément, soumis à un premier puis à un deuxième état de contrainte thermique, ce dispositif comportant une chambre thermique et des moyens pour porter la chambre à un premier puis à un deuxième état de contrainte thermique, et comportant en outre un référentiel indéformable. Ainsi, lors de chaque état de contrainte thermique, on peut mesurer l'élément et le référentiel en s'assurant que le référentiel est identique d'un état à l'autre.
Des moyens peuvent être prévus avec ce dispositif pour effectuer des clichés photo de l'élément et du cadre situés dans la chambre thermique: ces moyens sont soit situés dans la chambre thermique, soit situés à l'extérieur de cette chambre. Ces moyens comportent, par exemple, au moins une caméra numérique.
Selon un mode particulier de réalisation, le dispositif selon l'invention comporte en outre des moyens de mémorisation et de traitement de données relatives à des points de mesure du cliché photo dans chaque état de contrainte thermique.
Selon un autre mode particulier de réalisation, le dispositif selon l'invention comporte en outre des moyens pour déplacer l'élément à mesurer par rapport à la chambre thermique ou aux moyens pour effectuer les clichés photo. Ces moyens, par exemple un plateau tournant, peuvent être pilotés par des moyens de pilotage appropriés.
Le cadre thermostaté de référence peut comporter des moyens de circulation d'un fluide de refroidissement. C'est par exemple une structure tubulaire. Il peut avoir une forme cylindrique, et comporter une première et une deuxième boucles d'extrémités, des éléments latéraux reliant les boucles d'extrémités.
Des étalons de mesure de référence peuvent être prévus, en particulier pour une utilisation à température ambiante. De plus, des cibles de mesure peuvent être positionnées sur des platines fixées au cadre, pour faciliter le repérage de points de mesure lors de la prise de clichés photographiques.
L'invention a également pour objet un procédé pour mesurer les variations géométriques d'un élément, soumis à un premier puis à un deuxième état de contrainte thermique, comportant les étapes suivantes :

- placer l'élément dans un cadre thermostaté de référence
- effectuer une mesure de l'élément et du cadre thermostaté, dans le premier et le deuxième état de contrainte thermique.

En particulier, cette mesure peut être une mesure par photogrammétrie, par exemple en chambre thermique.
On peut mesurer des distances de référence entre des couples de points du cadre, dans un état de référence thermique. Les distances de référence sont par exemple mesurées par des étalons. Selon un mode de réalisation, des cibles de mesure sont positionnées sur des platines fixées au cadre thermostaté.

Un calcul photogrammétrique permet de transformer des mesures, faites en deux dimensions sur les clichés photo, en coordonnées tridimensionnelles représentatives de l'objet ou du cadre.

Cette transformation est par exemple faite à partir de la relation suivante :

$$\vec{V}_i = k\ M_{im}\ \vec{V}$$

où

$\vec{V}_i$ représente le vecteur image d'un point quelconque mesuré sur un cliché, ce vecteur passant par le point image après une correction d'étalonnage, et le centre optique d'un appareil ayant permis de réaliser les clichés photo,
$\vec{V}_o$ représente le vecteur objet, passant par le même centre optique et le point objet, correspondant au point mesuré,
$M_{im}$ est une matrice de rotation, exprimant l'orientation de l'image, ou du cliché, par rapport à l'objet,
$k$ est un facteur d'échelle permettant de passer de l'espace image à l'espace objet.

L'étape de mesure peut être répétée pour plusieurs états de contrainte thermique, chaque état étant considéré indépendamment des autres. Puis, une comparaison peut être effectuée entre les états successifs. Cette manière de procéder est aisée à mettre en oeuvre.

Selon une autre approche, l'étape de mesure est répétée pour plusieurs états de contrainte thermique, les points du cadre mesurés pour chaque état étant ensuite comparés avec les points du cadre mesurés dans un premier état de contrainte thermique, dit état de référence thermique.

Selon ce dernier mode de réalisation, afin d'accroître la précision de la mesure, et en particulier de réduire l'imprécision des différentes mesures du châssis aux différents états, il est possible d'intégrer, à la mesure de l'état n (défini par ses contraintes thermiques), les observations sur le châssis à l'état initial. Les calculs de l'état n incluent alors :

- les observations de l'élément à l'état n,
- les observations du châssis à l'état n,
- les observations du châssis à l'état initial.

Une telle solution permet d'obtenir une incertitude de mesure de l'ordre de $\pm$ 25 $\mu$m sur la mesure d'écart entre plusieurs états.

Par conséquent, selon ce mode de réalisation, on inclut dans l'évaluation de chaque état n les observations relatives à la mesure du cadre de référence lors du premier état. Ceci permet d'assurer la mise à l'échelle de tous les états, sans recourir à la mise en environnement d'étalons fragiles. La comparaison directe, entre les points du cadre tels que mesurés en début de cycle, et les mêmes points sur chacun des états, permet de garantir la stabilité du châssis de référence tout au long du cycle des essais. Toutes les évaluations sont, en plus, ainsi obtenues dans un seul et même référentiel, ce qui rend les évaluations de déformation sur l'objet plus pertinentes.

**Brève description des figures**

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un schéma général d'une installation mise en oeuvre selon la présente invention ;
- la figure 2 est un exemple de réalisation d'un circulateur pour un dispositif selon l'invention ;
- la figure 3 est une vue en perspective d'un exemple de circulateur pour un dispositif selon l'invention ;
- la figure 4 illustre une étape d'une mesure selon l'invention ;
- la figure 5 représente schématiquement une chambre thermique, deux caméras et un micro-ordinateur de pilotage de l'ensemble d'une installation mise en oeuvre selon la présente invention.

**Description détaillée de modes de réalisation de l'invention**

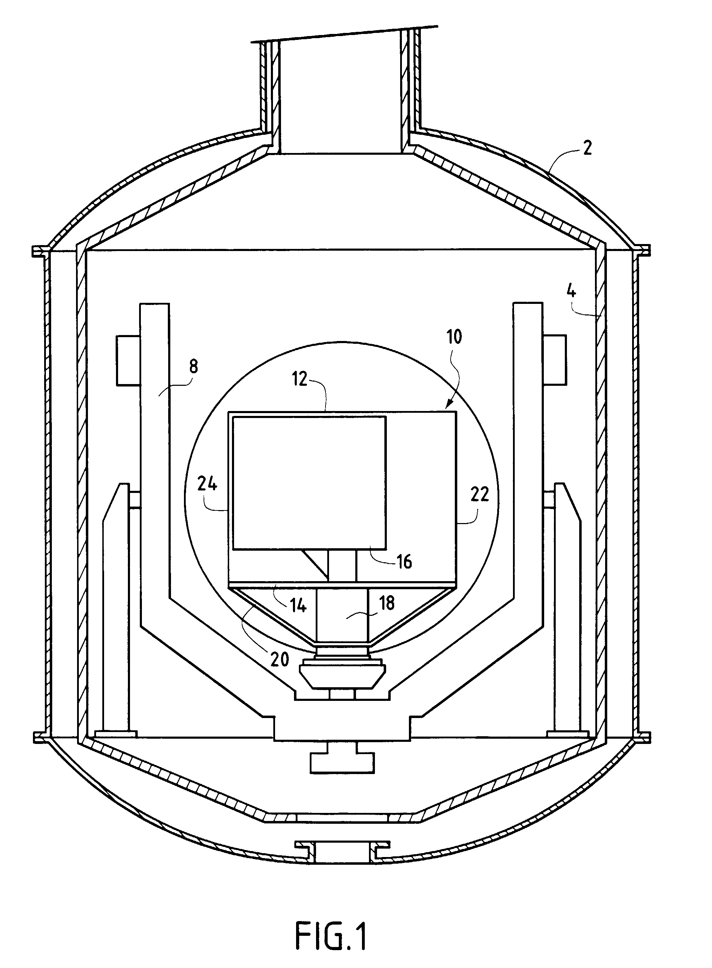

Tout d'abord, un schéma général d'un dispositif selon l'invention est représenté en figure 1.

Ce dispositif comporte une chambre thermique 2, 4, ou enceinte de simulation, ainsi que des moyens pour porter et maintenir l'intérieur de cette enceinte à des conditions de températures extrêmes, par exemple comprises entre -170°C et +150°C. Il comporte également des moyens pour maintenir une pression donnée à l'intérieur de ladite enceinte, par exemple la pression du vide (inférieure à $10^{-5}$ mbar). Le maintien de l'enceinte à basse température est, par exemple, obtenu par circulation périphérique d'azote liquide (à -196°C) dans des panneaux métalliques rayonnants. Les températures élevées peuvent être générées par des moyens appropriés, par exemple par lampe à émission infrarouge ou par lampe à lumière blanche.

A l'intérieur de l'enceinte, un élément 16, dont les variations géométriques d'un état de contrainte thermique à un autre état de contrainte thermique doivent être mesurées, est disposé sur des moyens de support 8, 20. La position exacte de cet élément 16, à l'intérieur de la chambre 2, 4 est réglée, d'une part à l'aide de la partie mobile 8 des éléments supports, et d'autre part à l'aide de moyen 18 plus précis, par exemple des viroles à mise à hauteur.

L'élément 16 est placé, ou contenu, à l'intérieur, d'une structure 10 régulée en température, elle-même située dans la chambre 2, 4.

Cette structure peut être un cadre thermostaté, à l'intérieur duquel un fluide de refroidissement ou caloporteur circule. Selon un mode de réalisation, c'est une structure tubulaire alimentée en permanence par un flux d'eau de température constante. Le cadre peut être par exemple constitué de tubes de cuivre supportés par une structure en aluminium.

Dans l'exemple illustré en figure 1, cette structure comporte une boucle supérieure 12, une boucle inférieure 14, et des éléments latéraux 22, 24 reliant les boucles supérieure et inférieure. Selon un exemple de réalisation, les boucles 12, 14 ont un diamètre de 2,8 m, et les éléments latéraux 22, 24 ont une hauteur de 2,10 m. Un tel dispositif peut être adapté à des éléments 16 de taille importante, par exemple à des dispositifs d'antenne destinés à être embarqués sur des satellites.

La partie 20 du support, qui supporte directement l'élément 16, peut être elle-même régulée en température.

L'enceinte peut être munie de hublots de visée (non représentés sur la figure) permettant de disposer une ou plusieurs caméras à l'extérieur de la chambre thermique.

Une ou plusieurs caméras peuvent aussi être disposées à l'intérieur de l'enceinte.

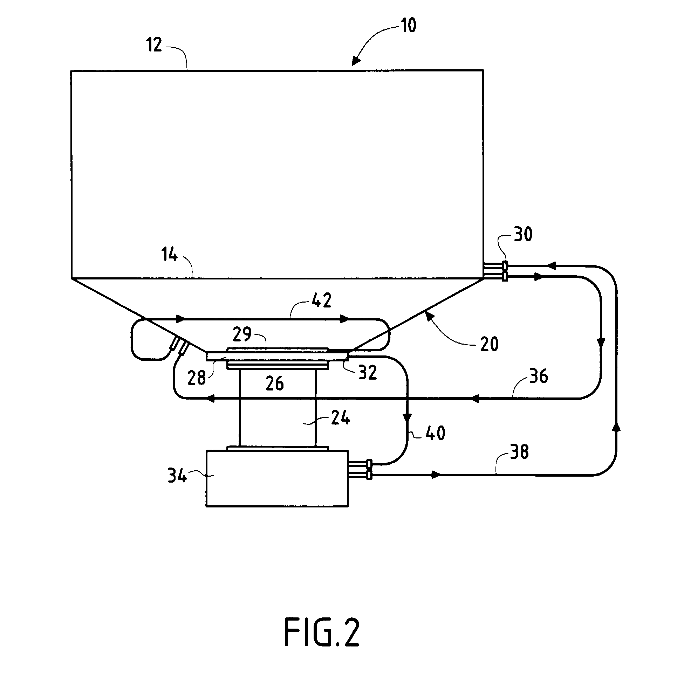

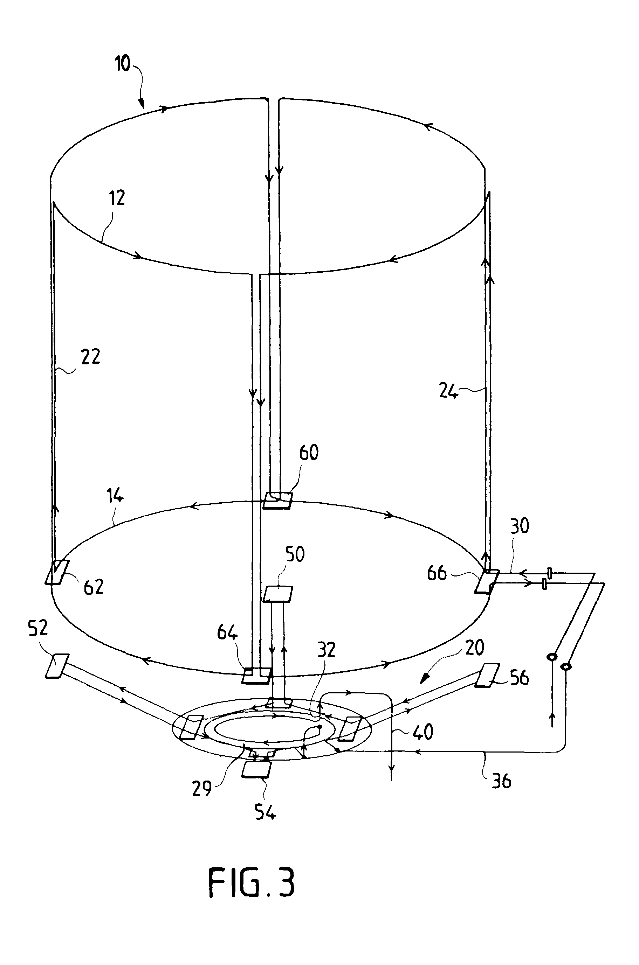

Les figures 2 et 3 représentent de manière plus détaillée un exemple de réalisation de la structure 10 régulée en température.

Le circuit du liquide de refroidissement est représenté sur les figures 2 et 3 par des flèches indiquant sa circulation. Ce circuit est de préférence assuré en série, sans dérivation possible entre son point 30 d'entrée dans le circulateur et son point 32 de sortie du circulateur. Un château d'eau 34 assure la régénération du fluide dans le circulateur. L'ajustement du débit et de la température de l'eau permet de maintenir avec précision la température du cadre. Celle-ci est mesurée à l'aide de moyens de mesure de la température fixés au cadre, par exemple à l'aide de capteurs filaires.

Selon un mode de réalisation, la base de la structure 20 de support comporte, successivement, un pied 24 de support, fixé au-dessus du château d'eau 34, une rondelle isolante 26, une plaque de support 28, et une plaque froide 29, à l'intérieur de laquelle circule le fluide de refroidissement.

Entre deux éléments du système, la circulation du fluide est assurée par des flexibles de liaison 36, 38, 40, 42 :

- flexible 36 de liaison entre le circulateur 10 proprement dit et le support 20 ;
- flexible 38 de liaison entre le château d'eau 34 et le circulateur 10 ;
- flexible de liaison 40 entre la plaque froide 29 et le château d'eau 34 ;
- flexible de liaison 42 entre la plaque froide 29 et le support 20.

La figure 3 représente l'ensemble du circulateur 10 et du support 20, en perspective. Le circulateur est constitué de quatre éléments disposés symétriquement autour d'un axe cylindrique vertical.

Ainsi, les boucles supérieure 12 et inférieure 14 sont constituées de quatre quarts de boucle, deux quarts de boucle voisins pouvant être alimentés en sens contraire en fluide caloporteur. Dans ces conditions, les montants verticaux 22, 24, sont tels que des montants voisins sont alimentés par le fluide dans le même sens.

L'élément de support 20 comporte quatre branches qui vont en s'écartant de la plaque froide 29, le fluide caloporteur circulant en aller et retour dans chacune des branches. A l'extrémité de chaque branche, une plaque de support 50, 52, 54, 56 est disposée en correspondance de plaques 60, 62, 64, 66 situées à la base du circulateur 10.

En raison de son faible coût de réalisation, la forme et les dimensions du cadre peuvent être adaptées aux tonnes et dimensions de l'objet à mesurer et de l'enceinte de simulation choisie.

De façon à rendre le cadre moins sensible aux écarts de température imposés par son environnement, sa structure est recouverte de protection thermique de type MSI (matelas super isolant). Ainsi, le cadre devient indépendant des conditions thermiques de simulation d'environnement autour du spécimen en essai. Seules des platines, soudées au cadre, et servant à recevoir des cibles de mesure, ne sont pas recouvertes par ces protections thermiques.

Les cibles sont, de préférence, réparties de façon homogène sur l'ensemble de la structure du cadre, et permettent ainsi de créer un réseau de points de passage qui consolide efficacement l'ajustement de faisceaux nécessaires à l'exploitation des mesures, par exemple à l'aide de clichés d'observation.

De préférence, les mesures sur l'élément 16 sont réalisées par photogrammétrie.

Une mesure 3D par photogrammétrie peut être décomposée en 3 étapes.

Une première étape, dite de simulation, consiste à simuler, à l'aide d'un logiciel, la configuration de mesure : nombre et position des points de mesure, nombre et position des stations de prises de vues, caractéristiques de la caméra photogrammétrique utilisée.

Le logiciel de simulation délivre alors une estimation de l'incertitude de mesure correspondant à la configuration retenue. Cette estimation détermine la nécessité, ou pas, d'une amélioration de la configuration en fonction des résultats escomptés.

Dans une deuxième étape, on réalise des prises de vues de l'objet sous des angles convergents. Deux variantes sont possibles :

- en cas d'impossibilité de déplacement de la caméra autour de l'objet, on peut faire déplacer l'objet devant la caméra, par exemple à l'aide d'un plateau tournant,
- en cas de mesure d'un phénomène dynamique, on synchronise plusieurs caméras afin de disposer, pour différents instants, de plusieurs clichés d'une même zone.

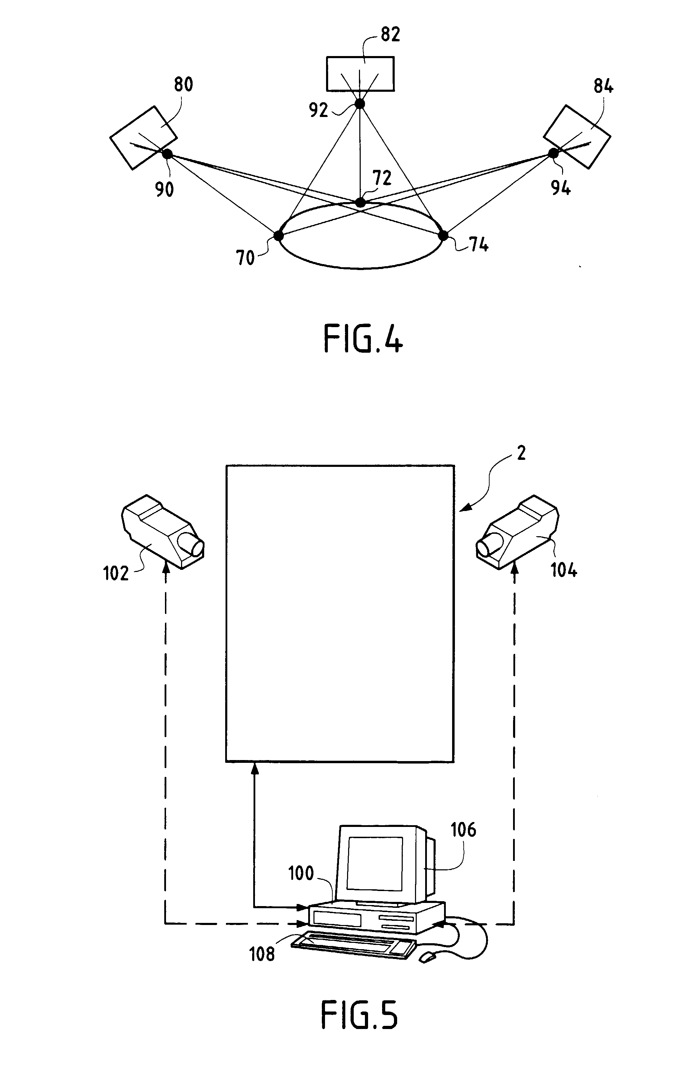

Dans une troisième étape (traitement des prises de vues), on mesure, sur chaque cliché, la position 2D de chaque point repéré par ses coordonnées (x, y). Comme illustré sur la figure 4, on reconstitue ainsi des faisceaux de droites, chaque droite passant par :

. le centre optique 70, 72, 74 de la caméra,
. la position 2D d'un point dans le plan cliché 80, 82, 84,
. la position 3D 90, 92, 94 du point.

Généralement, la mise à l'échelle des coordonnées 3D des points mesurés est assurée par la présence, dans la scène, d'un ou de plusieurs étalons de longueur. Ici, ce sont les points du châssis thermostaté qui permettent cette mise à l'échelle.

Le résultat de ce traitement est constitué de l'ensemble des coordonnées 3D des points mesurés.

Si nécessaire, des moyens de commande du déplacement de l'objet sont prévus, par exemple des moyens de commande d'un plateau tournant. Ces moyens comportent par exemple des moteurs pas-à-pas pilotés par un micro-ordinateur 100 situé en dehors de la chambre thermique 2, comme illustré sur la figure 5. Ce micro-ordinateur peut également être utilisé pour synchroniser plusieurs caméras 102, 104 en cas de fonctionnement dynamique.

Quel que soit le mode de fonctionnement, si les caméras 102, 104 utilisées sont des caméras classiques, il faut procéder au développement des films ou clichés obtenus. Les mesures effectuées sur ces clichés peuvent être mémorisées dans une mémoire du micro-ordinateur 100, un logiciel spécifique assurant le traitement de ces données pour en déduire les coordonnées 3D recherchées. Si les caméras 102, 104 sont à saisie numérique, les données peuvent être directement transférées en mémoire pour être ensuite traitées.

Les instructions de programme nécessaires au traitement des données sont par exemple stockées dans des mémoires ROM ou RAM conventionnelles.

Le dispositif illustré en figure 5 comporte en outre un écran d'affichage 106 et un clavier de commande 108.

La première mesure, lors d'un essai à l'aide d'un dispositif selon l'invention, est réalisée en conditions ambiantes, après avoir positionné des étalons de longueurs en périphérie du cadre. Les étalons peuvent ensuite être retirés, le cadre servant alors de substitution efficace à ces accessoires.

Une procédure complète de mesure d'un objet en cours d'essais de simulation spatiale consiste à effectuer une succession de mesures individuelles, chacune d'entre elles correspondant à un état de l'objet selon un palier de conditions d'environnement créées et maîtrisées.

Chaque état peut être considéré indépendamment des autres états, puis on effectue des comparaisons entre les états successifs.

Selon une variante, on peut inclure systématiquement, dans l'évaluation de chaque état, les observations relatives à la mesure du cadre de référence lors du premier état. Ceci permet d'assurer la mise à l'échelle de tous les états sans recourir à la mise en environnement d'étalons fragiles.

La comparaison directe entre les points du cadre tels que mesurés en début de cycle, et les même points, sur chacun des états, permet de garantir la stabilité du châssis tout au long du cycle des essais.

Toutes les évaluations sont en plus ainsi obtenues dans un seul et même référentiel, ce qui rend les évaluations de déformation sur l'objet plus pertinentes.

En reprenant l'exemple des deux référentiels $R_0$ et $R_1$ donnés dans l'introduction à la présente demande, le principe de calcul retenu pour cette variante consiste à intégrer, dans le même système d'équations, les observations (par exemple les coordonnées des points mesurés) des deux référentiels $R_0$ et $R_1$ avec les aménagements suivants :

- . toutes les observations des points fixes du châssis participent au calcul sous le même nom (on a une forme de mesure de répétabilité sur ces points).
- . toutes les observations du système ou sous-système faites à $T_0$ participent au calcul (sous le nom $N_0$).
- . toutes les observations du système ou sous-système faites à T1 participent au calcul (sous le nom $N_1$).

Les conséquences de ce principe sont multiples :

- . la notion d'échelle devient accessoire, ou totalement négligeable. Là où, dans la méthode classique, la maîtrise de l'échelle absolue est nécessaire, il ne faut plus ici considérer qu'une notion d'échelle relative. En effet, même une erreur d'échelle de 1 mm sur 1 mètre (1/1000$^{\text{ème}}$) n'aura pour conséquence qu'une erreur de 1/1000$^{\text{ème}}$ sur l'amplitude du mouvement thermoélastique, c'est-à-dire du troisième ordre par rapport aux mouvements attendus et à la précision de la mesure. On parvient ainsi à annihiler les effets d'erreurs instrumentales tout en allégeant la mise en oeuvre de l'essai.
- . les points fixes auront, au terme du calcul, une précision 1,4 fois meilleure ($2^{0.5}$) que les points du système $N_0$ ou $N_1$. Dans le cas contraire, les points fixes qui ne suivraient pas cette contrainte sont susceptibles de s'être déformés et sont soit retirés du calcul, soit intégrés à $N_0$ et $N_1$ (c'est-à-dire considérés comme points thermoélastiques) si leur disposition contribue à la qualité géométrique du réseau photogrammétrique. Ce type de calcul rend la détection des points fixes défaillants indépendante de leur nombre ou de leur localisation, et participe à la fiabilité des résultats.

Par souci de simplification, ce procédé de calcul a été décrit dans le cadre d'une comparaison de deux états $T_0$ et $T_1$. Il est directement applicable à la comparaison de n états par rapport à un état de référence $T_0$.

Le traitement des données relatives à chaque état, indépendamment des autres états ou en incluant systématiquement les observations relatives au premier état, peut être assuré par le micro-ordinateur 100, par exemple après mémorisation des données pour chaque état.

Un exemple de traitement des données photogrammétriques va être explicité.

Le calcul photogrammétrique permet de transformer des mesures, faites en 2D sur des images, en coordonnées 3D représentatives de l'objet mesuré. Cette transformation s'appuie sur les lois de l'optique géométrique, exprimées dans un espace mathématique de type affine. Le postulat de départ de cette transformation s'exprime dans l'espace vectoriel associé. Il traduit le fait que, pour tout point mesure sur une image, le vecteur image :

$$\vec{V}_i,$$

passant par le point image corrigé et le centre optique de la caméra, et le vecteur objet :

$$\vec{V}_o,$$

passant par le centre optique de la caméra et le point objet, sont alignés.

Compte tenu du fait que le référentiel objet est fixe pour l'ensemble de la mesure, mais que la position du référentiel image par rapport au référentiel objet change à chaque cliché, on peut écrire :

$$\vec{V}_o = M_{im} \vec{V}_i$$

où $M_{im}$ est une matrice (3x3) de rotation (de type matrice d'Euler par exemple) exprimant, par la définition de trois angles, l'orientation de l'image par rapport à l'objet.

Dans l'espace affine associé, cette relation devient :

$$\vec{V}_o = k\, M_{im} \vec{V}_i$$

où k est le facteur d'échelle permettant de passer de l'espace image à l'espace objet.

Sous une forme analytique, on peut écrire que :

$$\begin{bmatrix} X_c - x_p \\ y_c - y_p \\ - f \end{bmatrix} = k \begin{bmatrix} m_{11} & m_{12} & m_{13} \\ m_{21} & m_{22} & m_{23} \\ m_{31} & m_{32} & m_{33} \end{bmatrix} \begin{bmatrix} X - X_c \\ Y - Y_c \\ Z - Z_c \end{bmatrix}$$

Où

- $(x_c, y_c)$ sont les coordonnées images compensées, c'est-à-dire ayant subi une correction d'étalonnage par rapport aux coordonnées effectivement mesurées sur le cliché. Cette correction d'étalonnage minimise les effets des défauts optiques (distorsion, etc.) et optomécaniques (assemblage des lentilles) de la caméra.
- $(x_p, y_p, f)$ sont les coordonnées du centre optique en référentiel image,
- $(X_c, Y_c, Z_c)$ sont les coordonnées du même point exprimées cette fois en référentiel objet,
- $(X, Y, Z)$ sont les coordonnées objet à mesurer.

Pour une mesure image $(x_c, y_c)$, ce système permet d'obtenir trois équations, dont deux indépendantes. La troisième équation, comportant "$-f$", permet de déterminer k, qui est substitué dans les deux premières.
Ainsi :

$$k = \frac{-f}{m(X - X) + m(Y - Y) + m(Z - Z)}$$

et :

$$x_c = x_p + k[m_{11}(X - X_c) + m_{12}(Y - Y_c) + m_{13}(Z - Z_c)]$$

$$y_c = y_p + k[m_{21}(X - X_c) + m_{22}(Y - Y_c) + m_{23}(Z - Z_c)]$$

Ceci donne, dans le mode de calcul proposé dans cette invention :

-   Pour un point fixe du châssis nommé ch sur les images $n_{T0}$ et $n_{T1}$ :

$$(1) \quad x_{ch_c}^{n_{T_0}} = x_p^{n_{T_0}} + k_{ch}^{n_{T_0}} [m_{11}^{n_{T_0}} (X_{ch} - X_c^{n_{T_0}}) + m_{12}^{n_{T_0}} (Y_{ch} - Y_c^{n_{T_0}}) + m_{13}^{n_{T_0}} (Z_{ch} - Z_c^{n_{T_0}})]$$

$$(2) \quad y_{ch_c}^{n_{T_0}} = y_p^{n_{T_0}} + k_{ch}^{n_{T_0}} [m_{21}^{n_{T_0}} (X_{ch} - X_c^{n_{T_0}}) + m_{22}^{n_{T_0}} (Y_{ch} - Y_c^{n_{T_0}}) + m_{23}^{n_{T_0}} (Z_{ch} - Z_c^{n_{T_0}})]$$

$$(3) \quad x_{ch_c}^{n_{T_1}} = x_p^{n_{T_1}} + k_{ch}^{n_{T_1}} [m_{11}^{n_{T_1}} (X_{ch} - X_c^{n_{T_1}}) + m_{12}^{n_{T_1}} (Y_{ch} - Y_c^{n_{T_1}}) + m_{13}^{n_{T_1}} (Z_{ch} - Z_c^{n_{T_1}})]$$

$$(4) \quad y_{ch_c}^{n_{T_1}} = y_p^{n_{T_1}} + k_{ch}^{n_{T_1}} [m_{21}^{n_{T_1}} (X_{ch} - X_c^{n_{T_1}}) + m_{22}^{n_{T_1}} (Y_{ch} - Y_c^{n_{T_1}}) + m_{23}^{n_{T_1}} (Z_{ch} - Z_c^{n_{T_1}})]$$

On voit que $X_{ch}$, $Y_{ch}$, $Z_{ch}$ sont inchangés, respectivement, dans les équations [(1) et (3)] et [(2) et (4)]. $X_{ch}$, $Y_{ch}$ et $Z_{ch}$ sont des inconnues du calcul d'ajustement de faisceaux.

-   Par contre, pour une observation d'un point N aux instants $T_0$ et $T_1$, ces mêmes équations deviennent :

$$(5) \quad x_{N_c}^{n_{T_0}} = x_p^{n_{T_0}} + k_N^{n_{T_0}} [m_{11}^{n_{T_0}} (X_N^{T_0} - X_c^{n_{T_0}}) + m_{12}^{n_{T_0}} (Y_N^{T_0} - Y_c^{n_{T_0}}) + m_{13}^{n_{T_0}} (Z_N^{T_0} - Z_c^{n_{T_0}})]$$

$$(6) \quad y_{N_c}^{n_{T_0}} = y_p^{n_{T_0}} + k_N^{n_{T_0}} [m_{21}^{n_{T_0}} (X_N^{T_0} - X_c^{n_{T_0}}) + m_{22}^{n_{T_0}} (Y_N^{T_0} - Y_c^{n_{T_0}}) + m_{23}^{n_{T_0}} (Z_N^{T_0} - Z_c^{n_{T_0}})]$$

$$(7) \quad x_{N_c}^{n_{T_1}} = x_p^{n_{T_1}} + k_N^{n_{T_1}} [m_{11}^{n_{T_1}} (X_N^{T_1} - X_c^{n_{T_1}}) + m_{12}^{n_{T_1}} (Y_N^{T_1} - Y_c^{n_{T_1}}) + m_{13}^{n_{T_1}} (Z_N^{T_1} - Z_c^{n_{T_1}})]$$

$$(8) \quad y_{N_c}^{n_{T_1}} = y_p^{n_{T_1}} + k_N^{n_{T_1}} [m_{21}^{n_{T_1}} (Y_N^{T_1} - Y_c^{n_{T_1}}) + m_{22}^{n_{T_1}} (Y_N^{T_1} - Y_c^{n_{T_1}}) + m_{23}^{n_{T_0}} (Z_N^{T_1} - Z_c^{n_{T_1}})]$$

où les inconnues sont $X_N^{T_0}$, $Y_N^{T_0}$, $Z_N^{T_0}$, et $X_N^{T_1}$, $Y_N^{T_1}$, $Z_N^{T_1}$

L'ajustement de faisceaux consiste à résoudre, en bloc, par des algorithmes de type moindres carrés des résidus, l'ensemble des équations (1) à (8), écrites pour l'ensemble des points N et ch, des images n et des états $T_0$, $T_1$, $T_2$, etc.

Comme énoncé ci-dessus, les observations des points fixes du châssis participent au calcul sous le même nom ($X_{ch}$, $Y_{ch}$, $Z_{ch}$, dans les équations (1) à (4)), et les observations du système (c'est-à-dire $x_{N_c}^{T_0}$, $y_{N_c}^{T_0}$, $x_{N_c}^{T_1}$, $y_{N_c}^{T_1}$,) faites à (respectivement) $T_0$ et $T_1$ participent aussi au calcul.

## Revendications

1. Dispositif pour mesurer les variations géométriques d'un élément (16) soumis à un premier puis à un deuxième état de contrainte thermique, caractérisé en ce qu'il comporte :

   - une chambre thermique (2,4) et des moyens pour porter la chambre à un premier puis à un deuxième état de contrainte thermique
   - un cadre thermostaté (10) de référence, situé dans la chambre thermique, pour y placer l'élément (16).

2. Dispositif selon la revendication 1 comportant en outre des moyens (102,104) pour effectuer un cliché photo de l'élément ( 16) et du cadre ( 10), dans le premier et le deuxième états de contrainte thermique.

3. Dispositif selon la revendication 2, les moyens (102,104) pour effectuer un cliché photo de l'élément (16) et du cadre (10) étant situés dans la chambre thermique.

4. Dispositif selon la revendication 2, les moyens (102,104) pour effectuer un cliché photo de l'élément (16) et du cadre (10) étant situés à l'extérieur de la chambre thermique.

5. Dispositif selon l'une des revendications 2 à 4, les moyens pour effectuer un cliché photo comportant au moins une caméra numérique (102, 104).

6. Dispositif selon l'une des revendications 2 à 5, comportant en outre des moyens (100) de mémorisation et de traitement de données relatives à des points de mesure du cliché photo dans chaque état de contrainte thermique.

7. Dispositif selon l'une des revendications précédentes, comportant en outre des moyens pour déplacer l'élément à mesurer par rapport à la chambre thermique ou aux moyens (102,104) pour effectuer les clichés photo.

8. Dispositif selon la revendication 7, comportant en outre des moyens (100) de pilotage des moyens de déplacement de l'élément à mesurer.

9. Dispositif selon l'une des revendications précédentes, le cadre thermostaté de référence comportant des moyens (12,14,22,24) de circulation d'un fluide de refroidissement.

**10.** Dispositif selon l'une des revendications précédentes, le cadre thermostaté comportant une structure tubulaire.

**11.** Dispositif selon l'une des revendications précédentes, le cadre ayant une forme cylindrique, et comportant une première et une deuxième boucles (12, 14) d'extrémités et des éléments latéraux (22,24) reliant les boucles d'extrémités.

**12.** Dispositif selon l'une des revendications précédentes, comportant en outre des moyens de mesure de température fixés au cadre.

**13.** Dispositif selon l'une des revendications précédentes, comportant en outre des étalons de mesure de référence.

**14.** Dispositif selon l'une des revendications précédentes, comportant en outre des cibles de mesure positionnées sur des platines fixées au cadre.

**15.** Dispositif selon l'une des revendications 1 à 14, le cadre thermostaté étant recouvert d'une protection thermique.

**16.** Procédé pour mesurer les variations géométriques d'un élément (16) soumis à un premier puis à un deuxième état de contrainte thermique, comportant les étapes suivantes :

- placer l'élément dans un cadre thermostaté (10) de référence, qui est situé dans une chambre thermique (2, 4) et qui est maintenu à température constante,
- effectuer un cliché photo de l'objet et du cadre, dans le premier et le deuxième état de contraintes thermiques.

**17.** Procédé selon la revendication 16, comportant en outre la mesure de distances de référence entre des couples de points du cadre, dans un état de référence thermique.

**18.** Procédé selon la revendication 17, les distances de référence étant mesurées à l'aide d'étalons.

**19.** Procédé selon l'une quelconque des revendications 16 à 18, des cibles de mesure étant positionnées sur des platines fixées au cadre.

**20.** Procédé selon l'une des revendications 16 à 19, le cadre thermostaté étant recouvert d'une protection thermique.

**21.** Procédé selon l'une des revendications 16 à 20, un calcul photogrammétrique permettant de transformer des mesures, faites en deux dimensions sur les clichés photo, en coordonnées tridimensionnelles représentatives de l'objet ou du cadre.

**22.** Procédé selon la revendication 21, la transformation des mesures étant faite à partir de la relation suivante

$$\vec{V}_i = k\, M_{im}\, \vec{V}_o$$

où

$\vec{V}_i$ représente le vecteur image d'un point quelconque mesuré sur un cliché, ce vecteur passant d'une part par le point image après une correction d'étalonnage, et d'autre part par le centre optique d'un appareil ayant permis de réaliser les clichés photo,

$\vec{V}_o$ représente le vecteur objet, passant par le même centre optique et le point objet, correspondant au point mesuré,

$M_{im}$ est une matrice de rotation, exprimant l'orientation de l'image, ou du cliché, par rapport à l'objet,

k est un facteur d'échelle, permettant de passer de l'espace image à l'espace objet.

**23.** Procédé selon l'une des revendications 16 à 22, l'étape de mesure étant répétée pour plusieurs états de contrainte thermique, chaque état étant considéré indépendamment des autres, puis une comparaison étant effectuée entre les états successifs.

**24.** Procédé selon l'une des revendications 16 à 22, l'étape de mesure étant répétée pour plusieurs états de contrainte thermique, les points du cadre mesurés pour chaque état étant ensuite comparés avec les points du cadre mesurés dans un premier état de contrainte thermique, dit état de référence thermique.

**25.** Procédé selon l'une des revendications 16 à 22, les mesures dans les deux états de contrainte thermique étant intégrées dans un même système d'équations, qui prend en compte les observations des points fixes du cadre, ainsi que les observations de l'objet faites dans le premier puis dans le deuxième état de contraintes thermiques.

FIG.1

FIG.2

FIG.3

FIG.4

FIG.5

Office européen
des brevets

**RAPPORT DE RECHERCHE EUROPEENNE**

Numéro de la demande

EP 99 40 2820

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | JP 63 157047 A (MITSUBISHI ELECTRIC CORP) 30 juin 1988 (1988-06-30) | 1 | G01M19/00 |
| A | * abrégé * | 16 | |
| | --- | | |
| A | US 5 642 293 A (MANTHEY DAVID W  ET AL) 24 juin 1997 (1997-06-24) * abrégé; figure 2 * | 1 | |
| | ----- | | |

DOMAINES TECHNIQUES RECHERCHES (Int.Cl.7)

G01M
G01N
G01B

Le présent rapport a été établi pour toutes les revendications

| Lieu de la recherche | Date d'achèvement de la recherche | Examinateur |
|---|---|---|
| LA HAYE | 16 février 2000 | NAbrega, R |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 99 40 2820

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-02-2000

| Document brevet cité au rapport de recherche | Date de publication | Membre(s) de la famille de brevet(s) | Date de publication |
|---|---|---|---|
| JP 63157047    A | 30-06-1988 | AUCUN | |
| US 5642293    A | 24-06-1997 | AUCUN | |

EPO FORM P0460

Pour tout renseignement concernant cette annexe : voir Journal Officiel de l'Office européen des brevets, No.12/82